# EUROPEAN PATENT SPECIFICATION

(11) **EP 2 956 521 B1**
(45) Date of publication and mention of the grant of the patent: **18.10.2017**
(21) Application number: 14726289.3
(22) Date of filing: 22.04.2014
(51) Int. Cl.: C09K 8/36, C09K 8/76, C04B 28/02

(54) **METHODS OF USING WELLBORE SERVICING COMPOSITIONS**
VERWENDUNG VON BOHRLOCHWARTUNGSZUSAMMENSETZUNGEN
D'UTILISATION DES COMPOSITIONS D'ENTRETIEN DE PUITS DE FORAGE

(30) Priority: 30.04.2013 US 201313874234
(43) Date of publication of application: 23.12.2015
(73) Proprietor: Halliburton Energy Services, Inc., Houston, TX 77032-3219 (US)
(72) Inventor: REDDY, B. Raghava, Pearland TX 77584-6762 (US); BOUL, Peter James, Houston, Texas 77061 (US); AGASHE, Snehalata Sachin, Pune 411030 Maharashtra (IN); GUILLORY, Brittney Nichole, Houston, Texas 77057 (US); OLATERU, Damilola Deborah, Tomball, Texas 77375 (US)
(74) Representative: Hoffmann Eitle
(86) International application number: PCT/US2014/034999
(87) International publication number: WO 2014/179121

(56) References cited:
- US-A- 5 633 220
- US-A1- 2004 259 739
- US-A1- 2010 258 313
- US-A1- 2011 278 004

## Description

### BACKGROUND

This disclosure relates to methods of servicing a wellbore. More specifically, it relates to the use of delayed-release additives in wellbore servicing fluids.

Natural resources such as gas, oil, and water residing in a subterranean formation or zone are usually recovered by drilling a wellbore down to the subterranean formation while circulating a drilling fluid in the wellbore. After terminating the circulation of the drilling fluid, a string of pipe, e.g., casing, is run in the wellbore. The drilling fluid is then usually circulated downward through the interior of the pipe and upward through the annulus, which is located between the exterior of the pipe and the walls of the wellbore. Next, primary cementing is typically performed whereby a cement slurry is placed in the annulus and permitted to set into a hard mass (i.e., sheath) to thereby attach the string of pipe to the walls of the wellbore and seal the annulus. Subsequent secondary cementing operations may also be performed.

Many additives are added to wellbore servicing fluids (WSFs) to modify the fluid properties to suit the wellbore operations. Such additives may be added in solid form, as aqueous fluids or as oil emulsions/dispersions. When the concentrations of additives in aqueous fluids are such that the viscosities of the resulting fluids are very high, addition of such fluids to WSFs becomes challenging. In such cases, non-aqueous dispersions or water-in-oil emulsions of the additives may be employed. For example, water-soluble polymers, when dissolved in aqueous fluids beyond a certain concentration, result in fluid viscosities that are too unmanageable to use them as liquid additives. In such cases, the polymer may be prepared as water-in-oil emulsions by emulsion polymerization in a non-aqueous carrier medium at high polymer loadings and added to aqueous WSFs. Alternatively, solid polymers may be suspended in a non-aqueous carrier fluid, with the aid of dispersion-stabilizing surfactants and additives, and used as liquid additives. The surfactant combinations in such non-aqueous emulsions/dispersions containing dispersed additives are adjusted in such a way that the resulting liquid emulsion/dispersion is stable to phase-separation during storage, and yet when added to an aqueous fluid, the dispersed phase is hydrated immediately upon addition and becomes available to perform the intended function. Examples of non-aqueous liquid additives containing solid internal phases include viscosifying polymers, fluid loss control polymers, settling-prevention additives, friction-reducing polymers, acid-gelling polymers (AGPs), cross-linkers and the like.

Fluid loss additives (FLAs) are chemical additives used to control the loss of fluid to the formation through filtration. In wellbore servicing operations, loss of fluid to the formation can detrimentally affect the performance of WSFs, the permeability of the formation, and the economics of the wellbore servicing operations. The functionality of the FLA is ideally implemented once the fluid has been placed into the formation. For example, when the WSF is a cementitious slurry the FLA functions to prevent loss of fluid from the slurry to the formation once the slurry has been placed into the area of the formation where it is expected to set and form a hard mass. Challenges to the use of the FLA when used in the form of a non-aqueous water-in-oil emulsion or dispersion, or as a solid additive include the tendency of the FLA to viscosify a WSF upon addition at the wellsite resulting in a fluid viscosity that is outside of some user and/or process desired range; premature functioning of the FLA; and the negative impacts that the FLA can have on other components of the wellbore servicing fluids such that those other components fail to operate at their intended level and/or in their intended capacity. Thus an ongoing need exists for improved FLAs and methods of utilizing same.

US-A-5,633,220 discloses a water-in-oil emulsion containing an emulsifier comprising a block or graft copolymer or a reaction product of a polyalk(en)yl succinic anhydride and a polar compound having at least one hydroxyl or amino group.

US-A-2011/278004 discloses single-phase microemulsions comprising a solvent, a surfactant blend and a carrier fluid.

US-A-2010/258313 discloses a wellbore fluid comprising an oleaginous continuous phase, a non-oleaginous discontinuous phase comprising a water-soluble silicate, and an emulsifier.

US-A-2004/259739 discloses a method of formulating an invert emulsion drilling fluid, the method comprising mixing an oleaginous fluid, a non-oleaginous fluid and a polymeric surfactant.

### SUMMARY

According to a first aspect, the present invention provides a method of servicing a wellbore in a subterranean formation, the method comprising placing in the wellbore a liquid additive composition comprising (i) a liquid non-aqueous continuous phase; (ii) a discontinuous phase comprising a water-soluble polymeric additive; (iii) emulsion-stabilizing and water-wetting surfactants; and (iv) a discontinuous phase release-control agent.

According to a second aspect, the present invention provides a method of servicing a wellbore in a subterranean formation, the method comprising placing a wellbore servicing fluid comprising (i) a cementitious material and (ii) a liquid additive composition according to the above first aspect into the wellbore and/or subterranean formation, and allowing the cement to set.

The foregoing has outlined rather broadly the features and technical advantages of the present invention in order that the detailed description of the invention that follows may be better understood. Additional features and advantages of the invention will be described hereinafter that form the subject of the claims of the invention. It should be appreciated by those skilled in the art that the conception and the specific embodiments disclosed may be readily utilized as a basis for modifying or designing other structures for carrying out the same purposes of the present invention.

### BRIEF DESCRIPTION OF THE DRAWINGS

For a more complete understanding of the present disclosure and the advantages thereof, reference is now made to the following brief description, taken in connection with the accompanying drawings and detailed description, wherein like reference numerals represent like parts.
Figure 1 is a representation of a fluid loss additive composition present as an emulsion/dispersion in a non-aqueous carrier fluid.
Figure 2 is a graphical representation of a timed release of a fluid loss control additive in a cement slurry.
Figure 3 displays fluid loss as a function of the sample components for the samples from example 3.
Figures 4 and 5 are plots of the fluid loss as a function of conditioning time for the samples from examples 3 and 4.

### DETAILED DESCRIPTION

Disclosed herein are liquid additive compositions (LACs) and methods of making and using same. The LAC comprises (i) a liquid non-aqueous continuous phase, (ii) a discontinuous phase comprising a water-soluble polymeric additive, (iii) emulsion-stabilizing and water-wetting surfactants, and (iv) a discontinuous phase release-control agent. In some embodiments, the emulsion/dispersion is effective as a carrier and the polymeric additive is effective as a cargo. In an embodiment, the carrier (i.e., the emulsion/dispersion) is capable of engulfing, embedding, confining, surrounding, encompassing, enveloping, or otherwise retaining the cargo (e.g., fluid loss additive) such that the carrier and cargo are transported as a single material. In an embodiment, the cargo is carried or otherwise transported by the carrier. Further it is to be understood that the carrier (i.e., emulsion/dispersion) confines the cargo (e.g., fluid loss additive) to the extent necessary to facilitate the about concurrent transport of both materials. In an embodiment, the cargo replaces some portion of the material typically found within the carrier. In various embodiments, a LAC of the type disclosed herein may be used as an additive and combined with a wellbore servicing fluid to improve the characteristics of the wellbore servicing fluid. These and other features of the LAC and methods of using same are described in more detail herein.

In an embodiment, the LAC comprises a fluid loss additive. Herein a fluid loss additive refers to a material used to control the loss of fluid from a wellbore servicing fluid to the formation. In an embodiment, the LAC comprises an acid gelling polymer (AGP). Herein the disclosure may refer to a polymer and/or a polymeric material. It is to be understood that the terms polymer and/or polymeric material herein are used interchangeably and are meant to each refer to compositions comprising at least one polymerized monomer in the presence or absence of other additives traditionally included in such materials. Polymer as used herein includes any combination of polymers, e.g., graft polymers, terpolymers, blends and the like. In an embodiment, the AGP polymer comprises anionic polymers, copolymers, cationic polymers, neutral polymers, biopolymers, synthetic polymers, crosslinked polymers, or combinations thereof.

Herein an AGP refers to a polymeric material which when contacted with an acidic fluid increases the viscosity of the fluid. It is contemplated that any polymeric material able to viscosify an acidic fluid of the type described herein may be suitably employed in this disclosure as an AGP. The acidic fluid may comprise hydrochloric acid, hydrofluoric acid, acetic acid, formic acid, citric acid, ethylenediaminetetraacetic acid ("EDTA"), glycolic acid, gluconic acid, sulfamic acid, or combinations thereof. For example, the acidic fluid may be an acetic acid solution at a concentration of 5 % by weight.

In an embodiment, an AGP suitable for use in the present disclosure may increase the viscosity of an acidic fluid by equal to or greater than about 100 mPa·s (100 cP), alternatively by equal to or greater than about 1000 mPa·s (1000 cP), or alternatively by equal to or greater than about 5000 mPa·s (5000 cP). In such embodiments, the acidic fluid contains 5 % acid by weight of the acidic fluid and the AGP is present in an amount of about 1 % by weight of the acidic fluid. In an embodiment, the increase in viscosity is greater than about 5, 10, 15, 20, 25, 30, 35, 40, 45, 50, 55, 60, 65, 70, 75, 80, 85, 90, 96, or 100% when compared to an acidic fluid in the absence of the AGP.

In an embodiment, the LAC comprises a biopolymer. "Biopolymer" as used herein refers to a polymer which can be found in a renewable natural resource such as a plant. In an embodiment, the biopolymer comprises a helical polysaccharide, for example diutan, scleroglucan, xanthan, or combinations thereof. In an embodiment, a biopolymer suitable for use in this disclosure has a molecular weight (MW) of from about 100,000 Daltons to about 10,000,000 Daltons, alternatively from about 300,000 Daltons to about 5,000,000 Daltons, alternatively from about 500,000 Daltons to about 1,500,000 Daltons. In an embodiment, a biopolymer suitable for use in this disclosure is used in the solid form (e.g., as granules) in the preparation of a LAC dispersion, and may have a mesh size of from about 80 to about 200, alternatively from about 10 to about 190, alternatively from about 50 to about 150, or alternatively from about 10 to about 250 US Sieve Series.

In an embodiment, the LAC comprises a synthetic polymer. Nonlimiting examples of synthetic polymers suitable for use in this disclosure include copolymers of acrylamide and 2-acrylamido-2-methylpropane sulfonic acid; copolymers of acrylamide and acrylic acid; copolymers of acrylamide and trimethylammoniumethylmethacrylate chloride; copolymers of acrylamide and trimethylammoniumethylmethacrylate sulfate; copolymers of acrylamide and trimethylammoniumacrylate chloride; copolymers of acrylamide and trimethylammoniumacrylate sulfate; copolymers of 2-acrylamido-2-methylpropane sulfonic acid and dimethylammoniumethyl methacrylate (DMAEMA); N-vinylpyrrolidone/2-acrylamido-2-methylpropane sulfonic acid copolymers; terpolymers of acrylamide, 2-acrylamido-2-methylpropane sulfonic acid and acrylic acid; terpolymers of acrylamide, acrylic acid and trimethylammoniumethylmethacrylate chloride; terpolymers of acrylamide, acrylic acid and trimethylammoniumethylmethacrylate sulfate; terpolymers of acrylamide, acrylic acid and trimethylammoniumethylacrylate chloride; terpolymers of acrylamide, acrylic acid and trimethylammoniumethylacrylate sulfate and combinations thereof. The molecular weight of the synthetic polymers can be greater than about 200,000 Daltons, alternatively greater than about 1,000,000 Daltons, alternatively greater than about 5,000,000 Daltons.

Nonlimiting examples of synthetic polymers suitable for use in this disclosure include SGA II gelling agent; SGA III gelling agent; SGA V gelling agent; and SGA HT acid gelling agent which are all water-in-oil emulsions of acrylamide based polymers; all of which are commercially available as non-aqueous emulsions from Halliburton Energy Services, Inc.

In an embodiment, the LAC comprises an emulsion. In an embodiment, the LAC comprises a water-in-oil emulsion fluid, termed an invert emulsion, comprising an oleaginous continuous phase and a non-oleaginous discontinuous phase. In some embodiments a polymer or polymeric material of the type disclosed herein is associated with the discontinuous phase of the LAC.

Nonlimiting examples of oleaginous fluids suitable for use in the invert emulsions of the present disclosure include petroleum oils, natural oils, synthetically-derived oils, diesel oil, kerosene oil, mineral oil, synthetic oil, polyolefins, alpha-olefins, internal olefins, polydiorganosiloxanes, esters, diesters of carbonic acid, paraffins, or combinations thereof.

In an embodiment, the concentration of the oleaginous fluid should be sufficient so that an invert emulsion forms and may be less than about 99 %, alternatively less than about 80 %, or alternatively less than about 60 % based on the volume of the invert emulsion. In one embodiment the amount of oleaginous fluid is from about 30 % to about 95 %, alternatively from about 40 % to about 90 %, or alternatively from about 50 % to about 75 %, based on the volume of the invert emulsion.

In an embodiment, the non-oleaginous fluid component of the invert emulsion may generally comprise any suitable aqueous liquid. Nonlimiting examples of non-oleaginous fluids suitable for use in the present disclosure include sea water, tap water, freshwater, water that is potable or non-potable, untreated water, partially treated water, treated water, deionized water, distilled water, produced water, city water, well-water, surface water, naturally-occurring and artificially-created brines containing organic and/or inorganic dissolved salts, liquids comprising water-miscible organic compounds, or combinations thereof.

The salt or salts in the water may be present in an amount ranging from greater than about 0 % by weight to a saturated salt solution, alternatively from about 0 to about 15%, or alternatively from about 2 to about 5% by weight of discontinuous phase. In an embodiment, the salt or salts in the water may be present within the aqueous-based fluid in an amount sufficient to yield a saturated brine.

Nonlimiting examples of aqueous brines suitable for use in the present disclosure include chloride-based, bromide-based, phosphate-based or formate-based brines containing monovalent and/or polyvalent cations, salts of alkali and alkaline earth metals, or combinations thereof. Additional examples of suitable brines include, but are not limited to NaCl, KCl, NaBr, CaCl₂, CaBr₂, ZnBr₂, ammonium chloride (NH₄Cl), potassium phosphate, sodium formate, potassium formate, cesium formate, or combinations thereof. The choice of brine may be dictated by a variety of factors such as the formation condition and the desired density of the resulting solution.

The amount of the discontinuous phase within the LAC may be from about 5% to about 70%, alternatively from about 15% to about 60%, or alternatively from about 25% to about 50%. In an embodiment, the emulsion comprises the remainder of the LAC when all other components are accounted for.

In an embodiment, the LAC comprises an emulsion-stabilizing surfactant, i.e., an emulsifier. Without wishing to be limited by theory, an emulsion-stabilizing surfactant is a compound that aids in the formation of an emulsion (i.e., a mixture of two or more liquids that are normally immiscible) by decreasing the interfacial tension between immiscible liquids (e.g., oil and water); or a compound that stabilizes an already existing emulsion by decreasing the separation tendency of the liquids; or both. Without wishing to be limited by theory, an emulsion-stabilizing surfactant is a material characterized by a water-loving hydrophilic portion and an oil-loving hydrophobic portion.

In an embodiment, the LAC comprises any suitable emulsion-stabilizing surfactant compatible with the other components of a WSF and/or a wellbore servicing operation.

In an embodiment, the emulsion-stabilizing surfactant comprises a carboxylic acid-terminated polyamide (CATP), a mixture produced by a Diels-Alder reaction of dienophiles with a mixture of fatty acids and/or resin acids, an ester-based polymeric surfactant, or combinations thereof. In an embodiment, the emulsion-stabilizing surfactant comprises an oil-soluble surfactant.

In an embodiment, the emulsion-stabilizing surfactant comprises a carboxylic acid-terminated polyamide (CATP). The CATP may be a product of a condensation reaction between a fatty acid and a polyamine. In an embodiment, a condensation reaction between a fatty acid and a polyamine results in a mixture of reaction products that include CATPs. In some embodiments, the mixture of reaction products may be further processed using any suitable methodology to increase the amount of CATPs present. For example, the mixture of reaction products may be subjected to purification and/or separation techniques. Alternatively, the mixture of reaction products may be utilized in the emulsion-stabilizing surfactant without further processing. In an embodiment, the amount of CATPs present in the mixture of reaction products is about 90 wt.% based on the total weight of the mixture, alternatively from about 30wt.% to about 100 wt.%, or alternatively from about 85 wt.% to about 98 wt.%.

In some embodiments, the stoichiometry of the reactants in the condensation reaction for formation of the CATPs is adjusted so as to create a "partial amide" intermediate product. The partial amide may be characterized by a mole ratio of the reactive acid sites to amine sites of about 0.6:1, alternatively from about 0.5:1 to about 0.75:1, or alternatively from about 0.55:1 to about 0.65:1. The CATPs may be formed from the partial amide intermediate using any suitable methodology. For example, the remaining amine sites of the partial amide may be further reacted with an acid anhydride or polycarboxylic acid to produce the CATP.

In an embodiment, a tall oil fatty acid (TOFA) may be reacted with diethylenetriamine (DETA) in a molar ratio of DETA to TOFA of 1:2, and the reaction product may be further reacted with maleic anhydride, to form a two-thirds amide (2/3 amide) mixture. Tall oil is a product made from acid treatment of alkaline liquors obtained from the manufacturing of wood pulp.

In another embodiment, a TOFA may be reacted with DETA in a molar ratio of DETA to TOFA of 1:1.5, and the reaction products may be further reacted with maleic anhydride, to form a half-amide (1/2 amide) mixture.

In an embodiment, the emulsion-stabilizing surfactant comprises the reaction product of a Diels-Alder reaction of dienophiles with an acid mixture. The reaction product of the Diels-Alder reaction of dienophiles with an acid mixture is hereinafter designated a DARM. In an embodiment, the acid mixture comprises fatty acids and resin acids derived from the distillation of crude tall oil. The fatty acids found in tall oil are typically long chain monocarboxylic acids such as oleic, linoleic, myristic, linolenic, stearic and palmitic acid. Resin acids refer to a mixture of organic acids derived from the oxidation and polymerization reactions of terpenes and include compounds such as abietic acid, abietic acid derivatives and pimaric acid. The ratio of fatty acids to resin acids in the acid mixture may range from about 4:1 to about 1:1, alternatively from about 3:1 to about 1:1, or alternatively from about 2.5:1 to about 1.5:1. In an embodiment, the dienophile comprises carboxylic acids, polycarboxylic acids, anhydrides, or combinations thereof. The reaction of the dienophiles with the acid mixture (i.e., fatty acids and resin acids) results in a mixture of reaction products containing the DARM. In an embodiment, the amount of the DARM present in the mixture of reaction products is from about 50 wt.% to about 100 wt.%, alternatively from about 70 wt.% to about 98 wt.%, or alternatively from about 85 wt.% to about 97 wt.%, based on the total weight of the reaction products.

In an embodiment, the emulsion-stabilizing surfactant is a blend of a CATP and a DARM. The CATP and DARM may be combined using any suitable methodology, e.g., blending, mixing to form an emulsifier. In such embodiments, the ratio of the CATP to the DARM may range from about 1:5 to about 1:1, alternatively from about 1:4 to about 1:1, or alternatively from about 1:3 to about 1:2. In an embodiment, the quantity of the DARM will exceed the quantity of the CATP.

In an embodiment, the emulsion-stabilizing surfactant comprises one or more components of EZ MUL NT emulsifier; INVERMUL emulsifier; FORTI-MUL emulsifier; LE SUPERMUL emulsifier; or combinations thereof. EZ MUL NT emulsifier is an invert emulsifier and oil-wetting agent for mineral oil and paraffin-based drilling fluid systems; INVERMUL emulsifier is a primary emulsifier; FORTI-MUL emulsifier is a primary emulsifier and oil-wetting agent; and LE SUPERMUL emulsifier is an invert emulsifier and oil-wetting agent for synthetic based drilling fluid systems; all of which are commercially available from Halliburton Energy Services, Inc.

In an embodiment, the emulsion-stabilizing surfactant comprises HYPERMER 1031 surfactant, HYPERMER 1083 surfactant, HYPERMER 1599 surfactant, HYPERMER 2234 surfactant, HYPERMER 2524 surfactant, all of which are ester-based polymeric surfactants, and are commercially available from Croda International.

In an embodiment, the emulsion-stabilizing surfactant is present within the LAC in an amount of from about 0.5 wt.% to about 10 wt.%, alternatively from about 1 wt.% to about 6 wt.%, or alternatively from about 2 wt.% to about 4 wt.% based on the total weight of the LAC.

In an embodiment, the LAC further comprises a water-wetting surfactant. The water-wetting surfactant may function to improve the compatibility of the LAC with other fluids (e.g., WSFs). In an embodiment, a water-wetting surfactant may be used to enhance the ability of the invert emulsion to break and release the contents of the discontinuous internal phase when the invert emulsion is contacted with an aqueous-based WSF.

Nonlimiting examples of water-wetting surfactants suitable for use in the present disclosure include ethoxylated nonyl phenol phosphate esters, nonionic surfactants, cationic surfactants, anionic surfactants, amphoteric/zwitterionic surfactants, alkyl phosphonate surfactants, linear alcohols, nonylphenol compounds, alkyoxylated fatty acids, alkylphenol alkoxylates, ethoxylated amides, ethoxylated alkyl amines, betaines, methyl ester sulfonates, hydrolyzed keratin, sulfosuccinates, taurates, amine oxides, alkoxylated fatty acids, alkoxylated alcohols, lauryl alcohol ethoxylate, ethoxylated nonyl phenol, ethoxylated fatty amines, ethoxylated alkyl amines, cocoalkylamine ethoxylate, betaines, modified betaines, alkylamidobetaines, cocoamidopropyl betaine, quaternary ammonium compounds, trimethyltallowammonium chloride, trimethylcocoammonium chloride, or combinations thereof.

Other examples of water-wetting surfactants that may be suitable for use in the present disclosure include without limitation CFS-485 casing cleaner, LOSURF-300M surfactant, LOSURF-357 surfactant, LOSURF-400 surfactant, LOSURF-2000S surfactant, LOSURF-2000M surfactant, LOSURF-259 nonemulsifier, and NEA-96M surfactant. CFS-485 casing cleaner is a blend of surfactants and alcohols; LOSURF-300M surfactant is a nonionic surfactant; LOSURF-357 surfactant is a nonionic liquid surfactant; LOSURF-400 surfactant is a nonemulsifier; LOSURF-2000S surfactant is a blend of an anionic nonemulsifier and an anionic hydrotrope; LOSURF-2000M surfactant is a solid surfactant; LOSURF-259 nonemulsifier is a nonionic, nonemulsfier blend; and NEA-96M surfactant is a general surfactant and nonemulsifier; dispersion all of which are commercially available from Halliburton Energy Services, Inc.

In an embodiment, a water-wetting surfactant of the type disclosed herein may be present within the LAC in an amount of from about 1 wt.% to about 10 wt.%, alternatively from about 2 wt.% to about 8 wt.%, or alternatively from about 3 wt.% to about 4 wt.%, based on the total weight of the LAC.

In an embodiment, the polymer or polymeric material content of the discontinuous phase of the emulsion comprises about 20% to about 100%, alternatively from about 40% to about 90%, or alternatively about 50% to about 80% by weight of the discontinuous phase.

In an embodiment, the LAC comprises a solid dispersion. In an embodiment, the LAC comprises a solid-in-oil fluid, termed dispersion, comprising an oleaginous continuous phase and a dispersed solid phase. In some embodiments a polymer or polymeric material of the type disclosed herein is dispersed in the oleaginous continuous phase of the LAC to obtain a stable suspension.

A variety of suspension-stabilizing materials can be used to obtain stable solid suspensions in oleaginous external phase. For example, the suspending aids may be polymeric agents such as polyamides, copolymers of acrylate and acrylic acids, organophilic clays, hydrophobic silicas, surfactants, or any combinations of the same. The release of the additive from the discontinuous phase into the WSF can be controlled by the addition of suitable amounts of emulsion/dispersion stabilizing agents at the well site to suit the specific well conditions. For example, the release of a fluid loss control agent into the matrix fluid in a cement slurry can be controlled such that the additive release takes place after the cement slurry has been placed against the formation behind the casing. Such controlled release may avoid premature slurry viscosification and/or interference with the functioning of other additives.

Suitable additives which allow for control of the discontinuous phase include without limitation those that stabilize the discontinuous phase against release immediately after the addition of LAC to a WSF. Without being limited by theory, it is believed that the release control agents will migrate to the interphase of continuous and discontinuous phases and stabilize the discontinuous phase until wellbore conditions destabilize the interphase causing release of the contents of the discontinuous phase into WSF. Examples of control release agents suitable for use in the present disclosure include without limitation surfactants that stabilize water-in-oil invert emulsions or solid-in-oil dispersions. Specific commercial examples include ester-based polymeric surfactants such as those available under the trade name HYPERMER from Croda International, and surfactants sold under the trade name SPAN which are sorbitan esters. In an embodiment, the discontinuous phase controlled release agents (referred to hereafter as the DPCR agent) are oil-soluble surface active materials. The amount of DPCR agent utilized will depend on a variety of factors such as wellbore temperatures, location at which discontinuous phase is to be released, placement time, desired release rate, and the composition of the WSF. In an embodiment, an amount of the DPCR agent is stirred into the emulsion/dispersion and the resulting mixture allowed to equilibrate between phases and the interphase for equal to or greater than about 24 hrs, alternatively for greater than about 18 hrs, or alternatively for greater than about one hour prior to use.

In an embodiment, the LAC may be prepared using any suitable method or process. The components of the LAC (e.g., FLA, invert emulsion, emulsion-stabilizing surfactant, etc.) may be combined using any mixing device compatible with the composition such as a mixer or a blender. In an embodiment, the LAC is prepared without the DPCR agent, and the DPCR agent is added at the wellsite in amounts suitable to meet the requirements for the particular application and/or wellbore conditions.

In an embodiment, the LAC without a DPCR agent has a discontinuous phase release time into an aqueous fluid (e.g., a WSF fluid) of from about 0 minutes to about 120 minutes, alternatively from about 5 minutes to about 60 minutes, or alternatively from about 10 minutes to about 30 minutes at wellsite ambient temperature. In an embodiment, the LAC without a DPCR agent with the specified discontinuous phase release are obtained, and a DPCR agent contacted with the LAC prior to use of the composition at the wellsite. In an embodiment, the LAC without a DPCR agent with the specified discontinuous phase is obtained or prepared, and a DPCR agent contacted in suitable amounts prior to use and stored for longer than 24 hours prior to use.

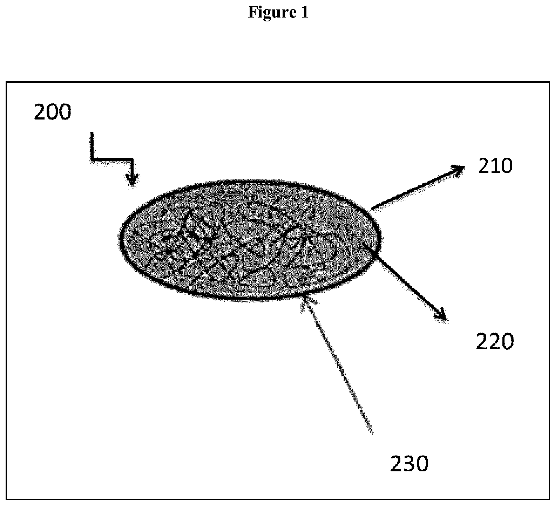

The components of the LAC may be blended together to form an emulsion having the additive (e.g., FLA) associated with the non-oleaginous component. Figure 1 depicts an embodiment of the LAC as a single emulsion droplet 200 having an external continuous oleaginous phase 210, an internal discontinuous phase 220 and a polymeric additive 230 disposed within the droplet 200 and associated with the discontinuous phase 220.

In an embodiment, the LAC is present in a WSF in an amount sufficient to deliver the discontinuous phase in amounts of from about 0.1 wt.% to about 10 wt.%, alternatively from about 0.5 wt.% to about 5 wt.%, alternatively from about 0.75 wt.% to about 3 wt.%, or alternatively from about 1 wt.% to about 2 wt.%, based on the weight of the WSF.

In an embodiment, a method of servicing a wellbore comprises drilling a wellbore in a subterranean formation and introducing to the formation a WSF comprising a LAC of the type disclosed herein. As used herein, a "servicing fluid" refers to a fluid used to drill, complete, work over, fracture, gravel pack, repair, or in any way prepare a wellbore for the recovery of materials residing in a subterranean formation penetrated by the wellbore. Examples of WSFs include, but are not limited to, cement slurries, completion fluids, fracturing fluids, gravel packing fluid, lost circulation fluids, spacer fluids, drilling fluids or muds. In an embodiment, WSFs may be used to service a wellbore that penetrates a subterranean formation. It is to be understood that "subterranean formation" encompasses both areas below exposed earth and areas below earth covered by water such as ocean or fresh water.

In an embodiment, the WSF comprises a cement slurry and a LAC. A cement slurry herein refers to a cementitious material such as a hydraulic cement that sets and hardens by reaction with water. Nonlimiting examples of hydraulic cements suitable for use in the present disclosure include Portland cements (e.g., classes A, B, C, G, and H Portland cements), pozzolana cements, gypsum cements, phosphate cements, high alumina content cements, silica cements, high alkalinity cements, shale cements, acid/base cements, magnesia cements such as Sorel cements, fly ash cement, zeolite cement systems, cement kiln dust cement systems, slag cements, micro-fine cement, metakaolin, and combinations thereof.

In an embodiment, the cementitious material (e.g., Portland cement) may be present within the WSF in an amount of from about 10 wt.% to about 85 wt.%, alternatively from about 40 wt.% to about 75 wt.%, alternatively from about 50 wt.% to about 70 wt.%, based on the total weight of the WSF.

In an embodiment, the cement slurry may include a sufficient amount of an aqueous fluid of the type previously described herein to form a pumpable cement slurry. In an embodiment, the aqueous fluid may be present within the cement slurry in an amount of from about 20 % to about 180 % by weight of cement (bwoc), alternatively from about 28 % to about 60 % bwoc, alternatively from about 36 % to about 66 % bwoc.

In an embodiment, the cement slurry may have a density of from about 839 kg/m³ (7 pounds per gallon (ppg)) to about 2397 kg/m³ (20 ppg), alternatively from about 1198 kg/m³ (10 ppg) to about 2157 kg/m³ (18 ppg), or alternatively from about 1558 kg/m³ (13 ppg) to about 2037 kg/m³ (17 ppg).

In some embodiments, the cement slurry comprises a conventional retardant, i.e., a conventional set retarder. Conventional retardants herein refer to materials which function to delay the onset of hydration of the cementitious materials and do not comprise a LAC of the type disclosed herein. Nonlimiting examples of conventional retardants suitable for use in the present disclosure include lignosulfonates, organic acids, alkali metal salts of organic acid, carboxy hexoses, and the corresponding lactones, polyvalent metal salts (e.g., polyvalent metal halides), and the like. Nonlimiting examples of carboxy hexoses suitable for use in the present disclosure include gluconic acid, glucuronic acid, and combinations thereof. An example of a hexose lactone includes glucanolactone. Examples of organic acids and their salts that may function as a conventional retardant suitable for use in the present disclosure include without limitation tartaric acid, citric acid, oxalic acid, gluconic acid, oleic acid, uric acid, EDTA, sodium citrate, or combinations thereof.

In an embodiment, the cement slurry comprises a dispersing agent. Without wishing to be limited by theory, a dispersing agent suitable for use in a cement slurry is a chemical additive that reduces the cement slurry viscosity in order to improve the fluid flow characteristics of the cement slurry, i.e., to improve the pumpability of the cement slurry. In an embodiment, the dispersing agent functions to keep apart, i.e., separated from each other, the cementitious material particles that are suspended in the cement slurry. The dispersing agent adheres to the surface of the cementitious material particles, and when the dispersing agent is ionically charged (e.g., contains sulfonate groups), the ionic charges repel each other and prevent the cementitious material particles from aggregating, e.g., contacting each other and sticking together. Adequately dispersed cement slurries may exhibit improved fluid-loss control, may be successfully mixed and pumped at higher densities.

Nonlimiting examples of dispersing agents suitable for use in the present disclosure include sulfonated dispersants; sulfonated polymer dispersants; naphthalene sulfonates; melamine sulfonates; sulfonated melamine formaldehyde condensate; sulfonate acetone formaldehyde condensate; ethoxylated polyacrylates; or combinations thereof.

Nonlimiting commercial examples of dispersing agents suitable for use in the present disclosure include CFR-1 dispersant CFR-3 dispersant; CFR-4 dispersant; CFR-6 dispersant; CFR-8 dispersant or combinations thereof. CFR-1, CFR-3, CFR-4, CFR-6, CFR-8 dispersants are cement dispersants, all of which are commercially available from Halliburton Energy Services, Inc.

In an embodiment, a dispersing agent of the type disclosed herein may be present within the cement slurry in an amount of from about 0.2 wt.% to about 3 wt.%, alternatively from about 0.5 wt.% to about 2 wt.%, or alternatively from about 0.75 wt.% to about 1.5 wt.%, based on weight of cement.

In an embodiment, the WSF comprising a LAC further comprises a fluid loss control enhancer. The fluid loss control enhancer may function to improve the efficiency of fluid loss control by the WSF comprising a LAC, and calcium aluminate cement slurries. Materials which may suitably function as fluid loss control of enhancers include acidic materials which lower the pH of the slurry, materials which buffer the pH of the slurry at desired pH values, or alkali or alkaline earth metal salts. The fluid loss control enhancer may be further characterized as materials which do not adversely affect the functioning of other additives present in the cement slurry composition. For example, a fluid loss control enhancer suitable for use in this disclosure would not function as significant retardants in a manner similar to the organic acid or metal halide retardants mentioned previously. Non-limiting examples of fluid loss control enhancers suitable for use in the present disclosure include glycolic acid, lactic acid, acetic acid, sodium chloride, calcium chloride, or combinations thereof. In an embodiment, the fluid loss control enhancer is present in a WSF that excludes Portland cement.

Materials suitable for use as fluid loss control enhancers in the present disclosure may be identified by measuring the effects of their presence on slurry properties using any suitable methodology. In high temperature applications, which require higher levels of an acidic retardant or a halide salt, (e.g., high alumina cement slurries) for example an organic acid retardant such as citric acid or gluconic acid or a halide salt such as sodium chloride, the retardant itself may function as a fluid loss control enhancer. In situations which utilize metal halide type of retardants, an acidic fluid loss control enhancer that does not provide significant additional retardation may be included, and vice versa. Alternatively, any combination of a metal halide retardant, an organic acid retardant and an acidic or salt type of fluid loss control enhancer may be employed in combination with an AGP.

In an embodiment, the fluid loss control enhancer is present in the WSF in an amount of from about 0.2% to about 4%, alternatively from about 0.5% to about 3% or alternatively from about 1% to about 2% based on the weight of cement.

In an embodiment, a WSF (e.g., cement slurry) comprising a LAC of the type disclosed herein may be used to service a wellbore or in a wellbore servicing operation. Herein servicing a wellbore includes, without limitation, positioning a wellbore servicing composition in the wellbore to isolate the subterranean formation from a portion of the wellbore, wherein the subterranean formation may or may not contain acidic gases; to support a conduit in the wellbore; to plug a void or crack in the conduit; to plug a void or crack in a cement sheath disposed in an annulus of the wellbore; to plug a perforation; to plug an opening between the cement sheath and the conduit; to prevent the loss of aqueous or nonaqueous drilling fluids into loss circulation zones such as a void, vugular zone, or fracture; to plug a well for abandonment purposes; a temporary plug to divert treatment fluids; and to seal an annulus between the wellbore and an expandable pipe or pipe string. For instance, the wellbore servicing composition may set in a loss-circulation zone and thereby restore circulation. The set composition plugs the zone and inhibits loss of subsequently pumped drilling fluid, which allows for further drilling.

In an embodiment, a WSF (e.g., cement slurry) comprising a LAC of the type disclosed herein may be employed in well completion operations such as primary and secondary cementing operations. Said compositions may be placed into an annulus of the wellbore and allowed to set such that it isolates the subterranean formation from a different portion of the wellbore. The wellbore servicing composition thus forms a barrier that prevents fluids in that subterranean formation from migrating into other subterranean formations. Within the annulus, the wellbore servicing composition also serves to support a conduit, e.g., casing, in the wellbore.

In an embodiment, the wellbore in which the WSF (e.g., cement slurry) comprising a LAC of the type disclosed herein is positioned belongs to a multilateral wellbore configuration. It is to be understood that a multilateral wellbore configuration refers to a single well with one or more wellbore branches radiating from the main borehole. In secondary cementing, often referred to as squeeze cementing, the wellbore servicing composition may be strategically positioned in the wellbore to plug a void or crack in the conduit, to plug a void or crack in the hardened sealant (e.g., cement sheath) residing in the annulus, to plug a relatively small opening known as a microannulus between the hardened sealant and the conduit, and so forth, thus acting as a sealant composition.

In an embodiment, the WSF comprises a cement slurry and a LAC, all of the type disclosed herein. For example the WSF may comprise water, Class G cement, CFR-3 dispersant, WG-17 LXP free-water control agent; and the FLA comprises SGA V gelling agent invert emulsion as the LAC that has been treated with HYPERMER 2234 as the DPCR agent. In an embodiment, the LAC is treated with DPCR agent for a period of 18 hrs.

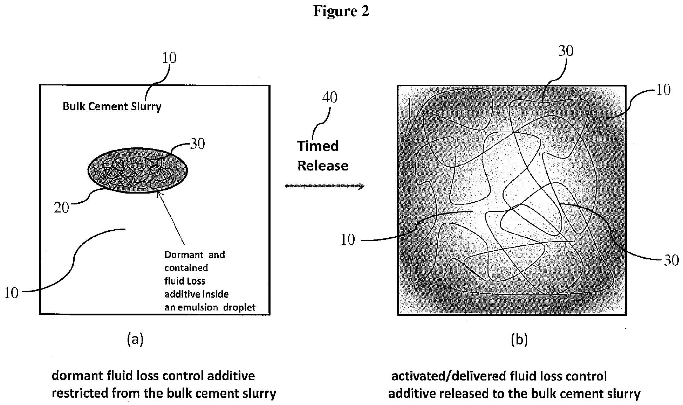

The WSF comprising a LAC may be placed in the wellbore and display its intended functionality (i.e., reducing fluid loss) after the WSF has been placed in the area of the wellbore and/or formation where the composition is intended to set into a hard mass due to the presence of DPCR. Thus, the functionality of the LAC is not exerted upon contact with the other components of the WSF but delayed for some user and/or process desired time period. A schematic of this delayed-functionality is depicted in Figure 2. Referring to Figure 2 condition (a), the cement slurry 10 comprises stable emulsion droplets 20 that further comprise a FLA 30. The FLA 30 is contained (i.e., isolated) inside the emulsion droplet 20 from the bulk of the cement slurry 10. After some user and/or process-desired time period, the structural integrity of the emulsion droplet 20 is compromised, and the contents of the emulsion droplet 20, i.e., the FLA polymer 30, are released (i.e., delivered during the "timed release" process 40) into the bulk of the cement slurry 10, as shown in Figure 22 condition (b), and may function to prevent fluid loss from the cement slurry 10.

In an embodiment, the FLA (e.g., comprising a polymer in the discontinuous phase) may be solubilized in the non-oleaginous fluid phase of the emulsion composition prior to forming the emulsion composition, i.e., prior to mixing the non-oleaginous fluid phase with the oleaginous fluid phase. In an embodiment, the LAC may be added to the premixed cement slurry. In another embodiment, the components of the LAC can be added to the WSF separately, for example the DPCR agent can be added to mix water prior to the addition of the other components of the LAC. In yet another embodiment, the LAC may be added to the liquid components of the cement slurry prior to, concurrently with, or subsequent to the other components of the cement slurry.

In an embodiment, the LAC does not allow for instantaneous or near-instantaneous release of the additive component (e.g., FLA) into WSF (e.g., cement slurry). The LAC may be characterized by a delay in the time in which the invert emulsion is broken after contact of the LAC with an aqueous WSF, i.e., a delayed breaking time. A WSF comprising a LAC of the type disclosed herein that contains an FLA may be characterized by a fluid loss of from about 10 cc/30 min to about 600 cc/30 minutes, alternatively from about 10 cc/30 min to about 500 cc/30 min, alternatively from about 30 cc/30 minutes to about 300 cc/30 min, or alternatively from about 50 cc/30 min to about 150 cc/30 min, wherein the fluid loss measurements were performed and calculated according to specifications recommended in ANSI/API Recommended Practice 10B-2 (Formerly 10-B), First Edition, July 2005.

In an embodiment, a WSF comprising a LAC of the type disclosed herein may delay the availability of the content of the discontinuous phase (e.g., delayed or controlled release of the FLA) until the time of placement at a desired location (i.e., at the job placement time). The time when the discontinuous phase content becomes available may be advantageously adjusted by adjusting the amount of DPCR agent in the LAC.

In an embodiment, the delayed release of the discontinuous phase content from the LAC may allow for loading high discontinuous phase content (e.g., a viscosifying polymer) concentrations into the WSF, without the attendant increase in viscosity typically associated with the addition of polymeric materials to WSFs. For example, the LAC may be included in the WSF in the disclosed amounts with an increase in the viscosity of the WSF of less than about 20%, alternatively 10% or alternatively 3% by weight of WSF.

In an embodiment, a WSF comprising a LAC of the type disclosed herein containing an FLA may advantageously allow for the use of lower amounts of dispersing agents and/or FLA (e.g., in cement slurries). When conventional anionic FLAs are used in cement slurries (i.e., FLAs that are available to the cement slurry immediately upon adding the FLA to the cement slurry) there may be a negative interference between the FLA and the dispersing agent, e.g., the FLA and dispersing agent both compete for adhering to the cement particles surfaces. However, when utilizing a WSF comprising a LAC of the type disclosed herein, the FLAs are contained inside emulsion droplets and thus do not compete with the dispersing agent for adhering to the cement particles surfaces. In an embodiment, the reduction in the amount of dispersing agent or FLA or both may be greater than about 50%, alternatively greater than about 30%, or alternatively greater than about 10% than would be needed if a DPCR agent was not used in combination with the LAC.

In an embodiment, a WSF comprising a LAC of the type disclosed herein is characterized by a fluid loss profile that initially is comparable to that of the WSF in the absence of the LAC but after some time period exhibits a reduction in fluid loss. WSF comprising a LAC of the type disclosed herein do not display a reduction in fluid loss that occurs upon contact of the LAC with the fluid.

In an embodiment, a WSF (e.g., an uncrosslinked fracturing fluid, or gravel pack fluid) comprising a LAC in which the discontinuous phase comprises a viscosifying material, delayed release of the viscosifying agent into WSF under downhole conditions may compensate for fluid viscosity loss due to either thermal thinning or thermal breakdown of an otherwise normal viscosifying additive (e.g., an LAC that has not been treated with DPCR or a material directly dissolved in WSF).

Additional advantages of utilizing a WSF comprising a LAC of the type disclosed herein may be apparent to one of skill in the art viewing this disclosure.

### EXAMPLES

The embodiments having been generally described, the following examples are given as particular embodiments of the disclosure and to demonstrate the practice and advantages thereof. It is understood that the examples are given by way of illustration and are not intended to limit the specification or the claims in any manner.

### COMPARATIVE EXAMPLE

The effect of LACs comprising FLAs of the type disclosed herein was investigated in a WSF that comprised hydraulic cement slurries based on Portland cement. The fluid loss agents used were invert emulsion containing acrylamide copolymers in the discontinuous phase. The sample composition and amounts of each component are presented in Table 1.

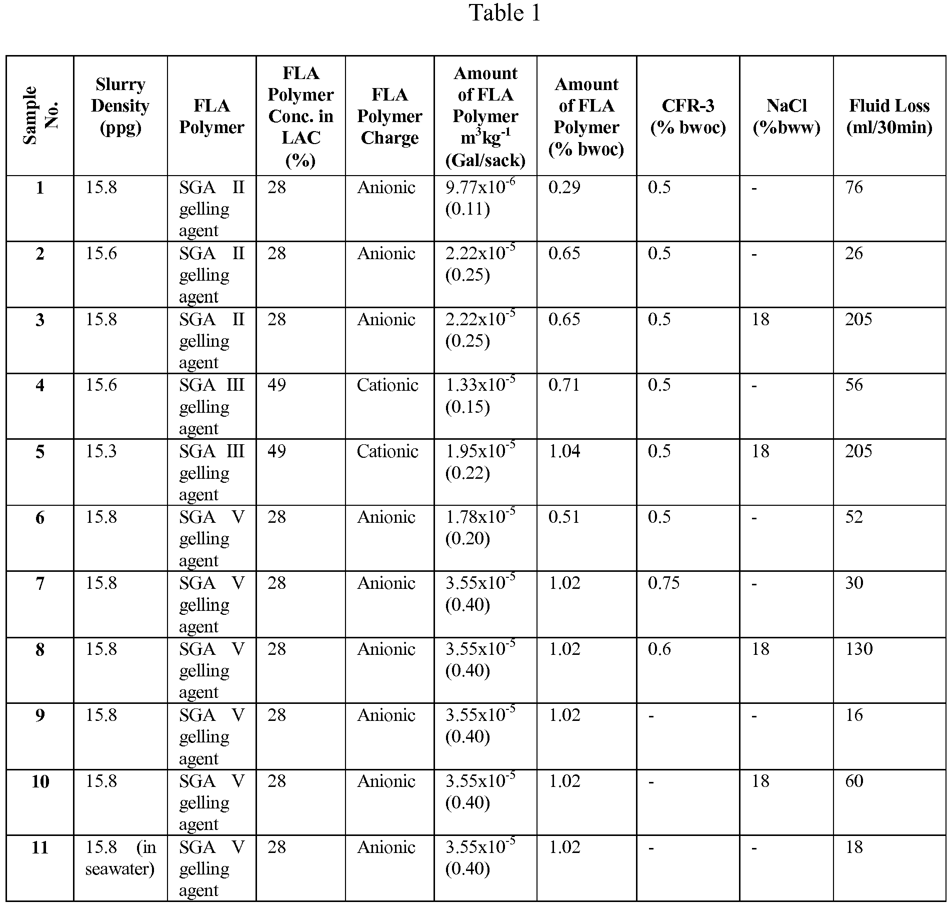

Each sample contained an SGA gelling agent as the FLA used in the invert emulsion form of the LAC designed for immediate release of the polymer present in the discontinuous phase into an aqueous fluid (e.g., a WSF), Class G cement and CFR-3 dispersant. The effectiveness of the FLA to control fluid loss at 88 °C (190 °F) was tested. SGA II gelling agent contained an anionic sulfonated monomer; SGA III gelling agent contained a quaternary ammonium based cationic monomer and SGA V gelling agent contained an anionic sulfonated monomer in addition to the common monomer acrylamide. SGA V was determined to be inherently biodegradable. Fluid loss was measured in accordance with ANSI/API Recommended Practice 10B-2 (Recommended Practices for Testing Well Cements), First Edition, July 2005, the relevant portions of which are incorporated herein by reference.

The results displayed in Table 1 show that for samples containing FLAs in the form of invert emulsions of the type disclosed herein fluid loss control (less than 50 mL/30 min) can be achieved in both fresh water and seawater. Samples containing salts (e.g., Samples 3, 5, 8, and 10) displayed increased amounts of fluid loss.

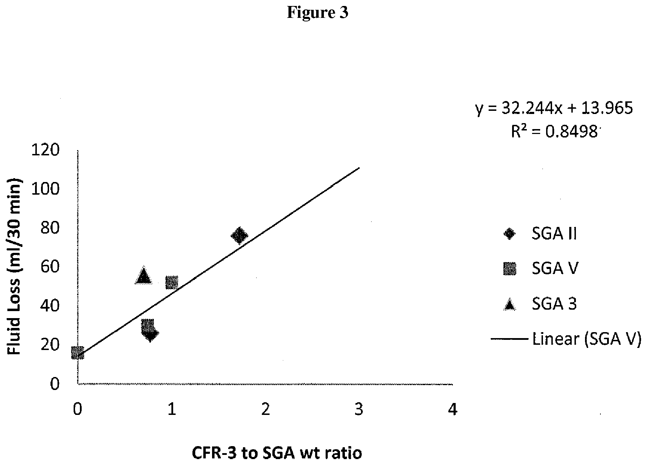

The data displayed in Table 1 also indicate the greater the weight ratio of dispersing agent (i.e., CFR-3 dispersant) to FLA, the greater the fluid loss from the sample. The relationship between the fluid loss values and CFR-3 dispersant amount is graphically depicted in Figure 3. Without wishing to be limited by theory, the effect of the dispersant on FLA function may be attributable to a competition between the dispersant and FLA for adsorption onto the cement particle surfaces in which case delayed release of one or the other additive would allow for full manifestation of the characteristic of the individual additive at the desired time, and can beneficially allow for reduction of the amounts of the additives needed to achieve the desired level of additive performance.

The rheological properties of several samples from Table 1 was investigated by measuring the viscosity using a F1 spring and a FANN Model 35 viscometer at two different temperatures, 21 °C (70°F) and 88 °C (190 °F). The rheology data are presented in Table 2 for Sample #6, in Table 3 for Sample #7, and in Table 4 for Sample #8. The rheology results are viscosity values expressed in mPa·s (cP).

**Table 2**

| **Temp. °C (°F)** | **Rheology (Sample#6)** | | | | | | | |
|---|---|---|---|---|---|---|---|---|
| | **600 RPM** | **300 RPM** | **200 RPM** | **100 RPM** | **60 RPM** | **30 RPM** | **6 RPM** | **3 RPM** |
| **21(70)** | 300+ | 300+ | 280 | 155 | 102 | 55 | 12 | 8 |
| **88 (190)** | 300+ | 300+ | 230 | 190 | 140 | 90 | 32 | 20 |

**Table 3**

| **Temp. °C (°F)** | **Rheology (Sample#7)** | | | | | | | |
|---|---|---|---|---|---|---|---|---|
| | **600 RPM** | **300 RPM** | **200 RPM** | **100 RPM** | **60 RPM** | **30 RPM** | **6 RPM** | **3 RPM** |
| **21 (70)** | 300+ | 300+ | 300+ | 240 | 172 | 101 | 32 | 17 |
| **88 (190)** | 300+ | 300+ | 300+ | 300+ | 271 | 200 | 81 | 52 |

**Table 4**

| **Temp. °C(°F)** | **Rheology (Sample#8)** | | | | | | | |
|---|---|---|---|---|---|---|---|---|
| | **600 RPM** | **300 RPM** | **200 RPM** | **100 RPM** | **60 RPM** | **30 RPM** | **6 RPM** | **3 RPM** |
| **21 (70)** | 300+ | 300+ | 300+ | 212 | 148 | 88 | 25 | 16 |
| **88 (190)** | 300+ | 300+ | 235 | 163 | 122 | 76 | 22 | 12 |

The slurry rheologies presented in Tables 2, 3 and 4 indicate the samples formed highly viscous but pumpable slurry viscosities demonstrating that FLAs used in the invert emulsion form as a LAC released the polymer content of the discontinuous phase into the aqueous phase immediately upon addition. As a general trend, the viscosities were found to increase with an increase in temperature (possibly due to acrylamide hydrolysis) except in the case of the cationic polymer, SGA III gelling agent, and Sample #8 which may due to the enhanced effects of the presence of high levels of salt at elevated temperatures.

### EXAMPLE 1

The effect of DPCR modification of a LAC of the type disclosed herein as a fluid loss control material was investigated. Two samples were prepared and designated Sample A and Sample B. The components of Samples A and B are presented in Table 5.

**Table 5**

| **Sample A** | | | |
|---|---|---|---|
| **Material** | **Amount** | **Unit** | |
| Water | 5.41x10⁻⁴ (6.09) | m³kg⁻¹ (gal/sk) | |
| HR-5 cement additive | 0.700% | bwoc | |
| Class H Cement | 100.00% | bwoc | |
| D-AIR 3000L defoamer | 0.10% | bwoc | |
| **FDP S1013 + HYPERMER 2234 surfactant** | 1.1% | bwoc | |
| WG-17 LXP free-water control agent | 0.43% | bwoc | |

| **Sample B** | | | |
|---|---|---|---|
| **Material** | **Amount** | **Unit** | |
| Water | 5.41x10⁻⁴ (6.09) | m³kg⁻¹ (gal/sk) | |
| HR-5 cement additive | 0.700% | bwoc | |
| Class H Cement | 100.0% | bwoc | |
| D-AIR 3000L defoamer | 0.10% | bwoc | |
| FDP S1013 | 0.55% | bwoc | |
| WG-17 LXP free-water control agent | 0.43% | bwoc | |

The FLA used was a modified SGA V gelling agent additive available as FDP S 1013 which is an invert emulsion comprising an anionic polymer comprising acrylamide and a sulfonated monomer in the discontinuous phase and the found to viscosify an acid solution in separate experiments. FDP S1013 is commercially available from Halliburton Energy Services, Inc. For Sample A, 1.5 grams of FLA as LAC and 1.5 grams of HYPERMER 2234 surfactant (1:1 weight ratio) were blended together in a 100 ml glass jar and left overnight to form a LAC of the type disclosed herein. Sample B contained the FLA alone as untreated LAC. Samples A and B also contained Class H cement, water, HR-5 cement additive, D-AIR 3000L defoamer, and WG-17 LXP free-water control agent. HR-5 cement additive is a chemically modified lignosulfonate that retards the setting of cement; and D-AIR 3000L defoamer is an additive that helps control the foaming of cement slurries; both of which are commercially available from Halliburton Energy Services, Inc. WG-17 LXP free-water control agent is a water soluble derivatized cellulose commercially available from Halliburton Energy Services, Inc. For Samples A and B, the LAC and DPCR/LAC respectively were introduced to the cement slurry after blending of the other sample components.

Both Sample A and Sample B were placed in an atmospheric consistometer and conditioned at 27 °C (80 °F) according to API procedure. The fluid loss for the two slurries (i.e., Samples A and B) was measured as described in Comparative Example at 15 minutes, 90 minutes, 135 minutes, and 180 minutes, and the data are displayed in Table 6.

**Table 6**

| **Conditioning Time** | **Sample A (milliliters of fluid loss in 30 minutes)** | **Sample B** |
|---|---|---|
| 15 minutes | 42 | 21 |
| 90 minutes | 32 | 22 |
| 135 minutes | 30 | 20 |
| 180 minutes | 29 | 21 |

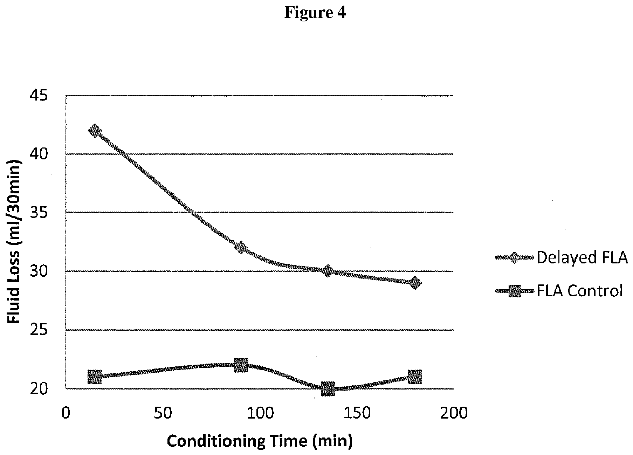

The data from Table 6 were plotted and the graph is displayed in Figure 4. The results demonstrate that for Sample B (i.e., containing the FLA alone as LAC), the sample's fluid loss values remained virtually unchanged as a function of the conditioning time indicating that all the FLA is released into cement slurry immediately upon addition. However, for Sample A containing a DPCR/LAC, a noticeable decrease in the fluid loss occurs after the sample is conditioned for a least 90 minutes indicating that the DPCR/LAC provides for delayed release of fluid loss control agent from the discontinuous phase due to the treatment with DPCR.

### EXAMPLE 2

Samples A and B from Table 5 were prepared as described in Example 1, and were employed in a similar set of experiments. Both Samples A and B were placed in an atmospheric consistometer and conditioned at 38 °C (100 °F), as described in Example 1. The fluid loss of the two slurries (i.e., Samples A and B) was measured as described in Comparative Example at 15 minutes, 45 minutes, 90 minutes, and 135 minutes, and the results are displayed in Table 7.

**Table 7**

| **Time elapsed (minutes)** | **Sample A (milliliters of fluid loss in 30 minutes)** | **Sample B (milliliters of fluid loss in 30 minutes)** |
|---|---|---|
| 15 | 32 | 25 |
| 45 | 23 | 20 |
| 90 | 21 | 19 |
| 135 | 18 | 19 |

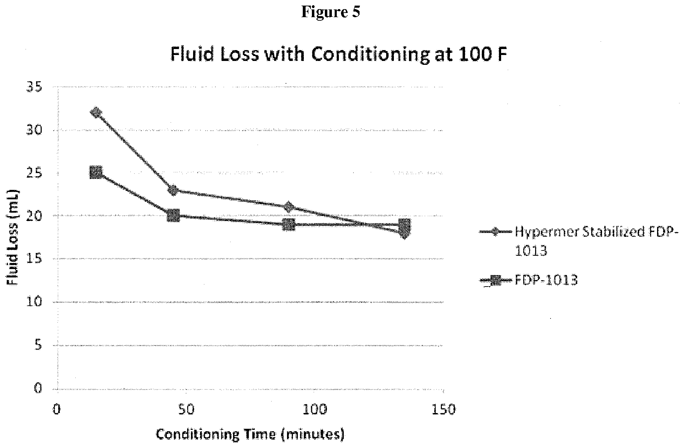

The data from Table 7 were plotted and the graph is displayed in Figure 5. When comparing the results from Table 7 and Figure 5 that were collected upon conditioning at 38 °C (100 °F), with the similar results that were collected upon conditioning at 27 °C (80 °F), which are shown in Table 6 and Figure 4, the 38 °C (100 °F) conditioning temperature indicates samples containing a LAC displayed thermally labile fluid loss due to the delaying of the release rate of the discontinuous phases by DPCR. The samples appear to release the FLA to the cement slurry within 50 minutes of conditioning at 38 °C (100 °F). The fluid loss observed for Sample A was more over time when the cement slurry is conditioned at 27 °C (80 °F) than when the cement slurry is conditioned at 38 °C (100 °F). However, for Sample A which contains LAC conditioned at 27 °C (80 °F), the amount of fluid loss from the sample is more than that of Sample B which contains LAC. This suggests that a thermal stimulus may accelerate activation of the DPCR/LAC.

### EXAMPLE 3

The rheology of the compositions for Samples A and B from Table 5 was investigated at 27 °C (80 °F) as a function of time. The rheology data are presented in Table 8 for Sample A, and in Table 9 for Sample B.

**Table 8**

| **Sample A** | **Time (minutes)** | | | | |
|---|---|---|---|---|---|
| | **0** | **5** | **30** | **75** | **150** |
| **Bob & Sleeve RPM** | Viscometer Reading | Viscometer Reading | Viscometer Reading | Viscometer Reading | Viscometer Reading |
| **600** | 262 | 300+ | 300+ | 300+ | 300+ |
| **300** | 177 | 196 | 200 | 200 | 201 |
| **200** | 134 | 145.5 | 148 | 145 | 154 |
| **100** | 82 | 89 | 87 | 85.5 | 94 |
| **60** | 57 | 59.5 | 58.5 | 58.5 | 64.5 |
| **30** | 34 | 35.5 | 35 | 34.5 | 41.5 |
| **6** | 10 | 11 | 10 | 10.5 | 14.5 |
| **3** | 6 | 6 | 6 | 6.5 | 9 |

**Table 9**

| **Sample B** | **Time** | | | |
|---|---|---|---|---|
| | **(minutes)** | | | |
| | **0** | **5** | **20** | **60** |
| **Bob & Sleeve RPM** | Viscometer Reading | Viscometer Reading | Viscometer Reading | Viscometer Reading |
| **600** | 300+ | 300+ | 300+ | 300+ |
| **300** | 300+ | 300+ | 300+ | 300+ |
| **200** | 300+ | 300+ | 300+ | 194 |
| **100** | 160.5 | 183.5 | 158.5 | 119 |
| **60** | 114 | 146 | 125 | 85 |
| **30** | 77 | 100 | 74 | 52.5 |
| **6** | 29.5 | 31.5 | 22.5 | 16 |
| **3** | 20.5 | 16.5 | 13 | 9.5 |

From Table 8 it can be seen that for Sample A, which contains a LAC, the viscosity of the slurry generally increases with time. This suggests that the amount of FLA available for fluid loss control in the cement slurry increases over time, i.e., the FLA is released over time from the emulsion due the presence of the LAC. Since the viscosity values in Table 8 continue to increase after 75 min, this indicates that the FLA has not been completely released from the LAC at 75 min.

From Tables 8 and 9 it can be seen that for Sample B, which contains the FLA in LAC form, the viscosity of the slurry does not generally increase over time. Also, for Sample B, the viscosity is substantially higher to begin with, when compared to the similar values for Sample A. In Table 9, there is almost no data collected above 100 RPM, because the viscosity of the slurries was too high and it interfered with the measurements. However, for the 100 RPM data points, at 0 minutes, the viscosity is twice as high for Sample B than it is for Sample A. This indicates that the method for the delayed release of the FLA from the discontinuous phase of LAC by treatment with DPCR may be also used to mitigate excess surface viscosities of cement slurries.

## Claims

1. A method of servicing a wellbore in a subterranean formation, the method comprising placing in the wellbore a liquid additive composition comprising (i) a liquid non-aqueous continuous phase; (ii) a discontinuous phase comprising a water-soluble polymeric additive; (iii) emulsion-stabilizing and water-wetting surfactants; and (iv) a discontinuous phase release-control agent.

2. The method of claim 1, wherein the water-soluble polymeric additive comprises a fluid loss additive.

3. The method of claim 2, wherein the fluid loss additive comprises an acid-gelling polymer.

4. The method of claim 3, wherein the acid-gelling polymer comprises an anionic polymer, a cationic polymer, a neutral polymer, a biopolymer, a synthetic polymer, a crosslinked polymer, or any combination thereof.

5. The method of claim 3 or claim 4, wherein the acid-gelling polymer increases the viscosity of an acidic fluid by at least 100 mPa·s (100 cP) when the acid-gelling polymer is present in an amount of 1 wt.% of the acidic fluid and the acid in the acidic fluid is acetic acid at a concentration of 5 wt.%.

6. The method of claim 4 or claim 5, wherein the synthetic polymer comprises a copolymer of acrylamide and 2-acrylamido-2-methylpropane sulfonic acid; a copolymer of acrylamide and acrylic acid; a copolymer of acrylamide and trimethylaminoethylmethacrylate chloride; a copolymer of acrylamide and trimethylaminoethylmethacrylate sulfate; a copolymer of acrylamide and trimethylaminoacrylate chloride; a copolymer of acrylamide and trimethylaminoacrylate sulfate; a copolymer of 2-acrylamido-2-methylpropane sulfonic acid and dimethylaminoethyl methacrylate (DMAEMA); a copolymer of N-vinylpyrrolidone and 2-acrylamido-2-methylpropane sulfonic acid; a terpolymer of acrylamide, 2-acrylamido-2-methylpropane sulfonic acid and acrylic acid; a terpolymer of acrylamide, acrylic acid and trimethylaminoethylmethacrylate chloride; a terpolymer of acrylamide, acrylic acid and trimethylaminoethylmethacrylate sulfate; a terpolymer of acrylamide, acrylic acid and trimethylaminoethylacrylate chloride; a terpolymer of acrylamide, acrylic acid and trimethylaminoethylacrylate sulfate; and any combination thereof.

7. The method of any preceding claim, wherein the emulsion-stabilizing surfactant comprises an oil-soluble surfactant, a carboxylic acid-terminated polyamide, a partial amide, a two-thirds amide, a half-amide, a mixture produced by a Diels-Alder reaction of dienophiles with a mixture of fatty acids and/or resin acids, an ester-based polymeric surfactant, or any combination thereof.

8. The method of any preceding claim, wherein the water-wetting surfactant comprises an alkyl phosphonate surfactant, a linear alcohol, a nonylphenol compound, an alkoxylated fatty acid, an alkylphenol alkoxylate, an ethoxylated amide, an ethoxylated alkyl amine, a methyl ester sulfonate, hydrolyzed keratin, a sulfosuccinate, a taurate, an amine oxide, an alkoxylated alcohol, an ethoxylated fatty amine, a betaine, a modified betaine, a quaternary ammonium compound, a microemulsion additive, or any combination thereof.

9. The method of any preceding claim, wherein the discontinuous phase release-control agent comprises an ester-based polymeric surfactant.

10. The method of any preceding claim, wherein the discontinuous phase release-control agent comprises an oil-soluble surface active material.

11. The method of any preceding claim, wherein the liquid additive composition is a component of a wellbore servicing fluid.

12. The method of claim 11, wherein the wellbore servicing fluid comprises a cement slurry.

13. A method of servicing a wellbore in a subterranean formation, the method comprising:
placing a wellbore servicing fluid comprising (i) a cementitious material and (ii) a liquid additive composition as defined in any of claims 1-10 into the wellbore and/or subterranean formation; and
allowing the cement to set.

14. The method of any of claim 13, wherein the wellbore servicing fluid further comprises a dispersant.

## Patentansprüche

1. Verfahren zur Wartung eines Bohrlochs in einer unterirdischen Formation, wobei das Verfahren das Einbringen einer flüssigen Additivzusammensetzung, umfassend
(i) eine flüssige nicht-wässrige kontinuierliche Phase;
(ii) eine diskontinuierliche Phase, die ein wasserlösliches Polymeradditiv umfasst;
(iii) emulsionsstabilisierende und wasserbenetzende Tenside; und
(iv) ein Mittel zur Steuerung der Freisetzung der diskontinuierlichen Phase, in das Bohrloch umfasst.

2. Verfahren gemäß Anspruch 1, wobei das wasserlösliche Polymeradditiv ein Fluidverlustadditiv umfasst.

3. Verfahren gemäß Anspruch 2, wobei das Fluidverlustadditiv ein mit Säuren gelbildendes Polymer umfasst.

4. Verfahren gemäß Anspruch 3, wobei das mit Säuren gelbildende Polymer ein anionisches Polymer, ein kationisches Polymer, ein neutrales Polymer, ein Biopolymer, ein synthetisches Polymer, ein quervernetztes Polymer oder eine Kombination davon umfasst.

5. Verfahren gemäß Anspruch 3 oder Anspruch 4, wobei das mit Säuren gelbildende Polymer die Viskosität eines sauren Fluids um mindestens 100 mPa·s (100 cP) erhöht, wenn das mit Säuren gelbildende Polymer in einer Menge von 1 Gew.-% des sauren Fluids vorliegt und die Säure im sauren Fluid Essigsäure in einer Konzentration von 5 Gew.-% ist.

6. Verfahren gemäß Anspruch 4 oder Anspruch 5, wobei das synthetische Polymer ein Copolmyer aus Acrylamid und 2-Acrylamido-2-methylpropansulfonsäure; ein Copolymer aus Acrylamid und Acrylsäure; ein Copolymer aus Acrylamid und Trimethylaminoethylmethacrylat-Chlorid; ein Copolymer aus Acrylamid und Trimethylaminoethylmethacrylat-Sulfat; ein Copolymer aus Acrylamid und Trimethylaminoacrylat-Chlorid; ein Copolymer aus Acrylamid und Trimethylaminoacrylat-Sulfat; ein Copolymer aus 2-Acrylamido-2-methylpropansulfonsäure und Dimethylaminoethylmethacrylat (DMAEMA); ein Copolymer aus N-Vinylpyrrolidon und 2-Acrylamido-2-methylpropansulfonsäure; ein Terpolymer aus Acrylamid, 2-Acrylamido-2-methylpropansulfonsäure und Acrylsäure; ein Terpolymer aus Acrylamid, Acrylsäure und Trimethylaminoethylmethacrylat-Chlorid; ein Terpolymer aus Acrylamid, Acrylsäure und Trimethylaminoethylmethacrylat-Sulfat; ein Terpolymer aus Acrylamid, Acrylsäure und Trimethylaminoethylacrylat-Chlorid; ein Terpolymer aus Acrylamid, Acrylsäure und Trimethylaminoethylacrylat-Sulfat und eine beliebige Kombination davon umfasst.

7. Verfahren gemäß einem vorherigen Anspruch, wobei das emulsionsstabilisierende Tensid ein öllösliches Tensid, ein Polyamid mit einer endständigen Carbonsäure, ein Teil-Amid ("partial amide"), ein Zweidrittel-Amid ("two-thirds amide"), ein Halb-Amid ("half-amide"), eine Mischung, die hergestellt wurde durch eine Diels-Alder-Reaktion von Dienophilen mit einer Mischung von Fettsäuren und/oder Harzsäuren, ein auf einem Ester basierendes Polymertensid oder eine beliebige Kombination davon umfasst.

8. Verfahren gemäß einem vorherigen Anspruch, wobei das wasserbenetzende Tensid ein Alkylphosphonat-Tensid, einen linearen Alkohol, eine Nonylphenolverbindung, eine alkoxylierte Fettsäure, ein Alkylphenolalkoxylat, ein ethoxyliertes Amid, ein ethoxyliertes Alkylamin, ein Methylestersulfonat, hydrolysiertes Keratin, ein Sulfosuccinat, ein Taurat, ein Aminoxid, einen alkoxylierten Alkohol, ein ethoxyliertes Fettsäureamin, ein Betain, ein modifiziertes Betain, eine quaternäre Ammoniumverbindung, ein Mikroemulsionsadditiv oder eine beliebige Kombination davon umfasst.

9. Verfahren gemäß einem vorherigen Anspruch, wobei das Mittel zur Steuerung der Freisetzung der diskontinuierlichen Phase ein auf einem Ester basierendes Polymertensid umfasst.

10. Verfahren gemäß einem vorherigen Anspruch, wobei das Mittel zur Steuerung der Freisetzung der diskontinuierlichen Phase ein öllösliches oberflächenaktives Material umfasst.

11. Verfahren gemäß einem vorherigen Anspruch, wobei die flüssige Additivzusammensetzung ein Bestandteil eines Bohrlochwartungsfluids ist.

12. Verfahren gemäß Anspruch 11, wobei das Bohrlochwartungsfluid eine Zementaufschlämmung umfasst.

13. Verfahren zur Wartung eines Bohrlochs in einer unterirdischen Formation, wobei das Verfahren umfasst:
Einbringen eines Bohrlochwartungsfluids, umfassend (i) ein zementartiges Material und (ii) eine flüssige Additivzusammensetzung, wie sie in einem der Ansprüche 1-10 definiert ist, in das Bohrloch und/oder die unterirdische Formation; und
Abbinden des Zements.

14. Verfahren gemäß Anspruch 13, wobei das Bohrlochwartungsfluid ferner ein Dispergiermittel umfasst.

## Revendications

1. Procédé d'entretien d'un puits de forage dans une formation souterraine, le procédé comprenant le placement dans le puits de forage d'une composition d'additif liquide comprenant (i) une phase liquide continue non aqueuse ; (ii) une phase discontinue comprenant un additif polymère hydrosoluble ; (iii) des tensioactifs de stabilisation d'émulsion et de mouillage par l'eau ; et (iv) un agent de régulation de libération de phase discontinue.

2. Procédé selon la revendication 1, dans lequel l'additif polymère hydrosoluble comprend un additif de perte de fluide.

3. Procédé selon la revendication 2, dans lequel l'additif de perte de fluide comprend un polymère de gélification d'acide.

4. Procédé selon la revendication 3, dans lequel le polymère de gélification d'acide comprend un polymère anionique, un polymère cationique, un polymère neutre, un biopolymère, un polymère synthétique, un polymère réticulé, ou une combinaison de ceux-ci.

5. Procédé selon la revendication 3 ou la revendication 4, dans lequel le polymère de gélification d'acide augmente la viscosité d'un fluide acide d'au moins 100 mPa.s (100 cP) quand le polymère de gélification d'acide est présent en une quantité de 1 % en poids du fluide acide et que l'acide dans le fluide acide est l'acide acétique à une concentration de 5 % en poids.

6. Procédé selon la revendication 4 ou la revendication 5, dans lequel le polymère synthétique comprend un copolymère d'acrylamide et d'acide 2-acrylamido-2-méthylpropane sulfonique ; un copolymère d'acrylamide et d'acide acrylique ; un copolymère d'acrylamide et de chlorure de méthacrylate de triméthylaminoéthyle ; un copolymère d'acrylamide et de sulfate de méthacrylate de triméthylaminoéthyle ; un copolymère d'acrylamide et de chlorure d'acrylate de triméthylamino ; un copolymère d'acrylamide et de sulfate d'acrylate de triméthyl-amino ; un copolymère d'acide 2-acrylamido-2-méthyl-propane sulfonique et de méthacrylate de diméthyl-aminoéthyle (DMAEMA) ; un copolymère de N-vinyl-pyrrolidone et d'acide 2-acrylamido-2-méthylpropane sulfonique ; un terpolymère d'acrylamide, d'acide 2-acrylamido-2-méthylpropane sulfonique et d'acide acrylique ; un terpolymère d'acrylamide, d'acide acrylique et de chlorure de méthacrylate de triméthyl-aminoéthyle ; un terpolymère d'acrylamide, d'acide acrylique et de sulfate de méthacrylate de triméthyl-aminoéthyle ; un terpolymère d'acrylamide, d'acide acrylique et de chlorure d'acrylate de triméthyl-aminoéthyle ; un terpolymère d'acrylamide, d'acide acrylique et de sulfate d'acrylate de triméthyl-aminoéthyle ; et une combinaison de ceux-ci.

7. Procédé selon une quelconque revendication précédente, dans lequel le tensioactif de stabilisation d'émulsion comprend un tensioactif oléosoluble, un polyamide à terminaison acide carboxylique, un amide partiel, un amide deux tiers, un semi-amide, un mélange produit par une réaction de Diels-Alder de diénophiles avec un mélange d'acides gras et/ou d'acides de résine, un tensioactif polymère à base d'ester, ou n'importe quelle combinaison de ceux-ci.

8. Procédé selon une quelconque revendication précédente, dans lequel le tensioactif de mouillage par l'eau comprend un tensioactif de type phosphonate d'alkyle, un alcool linéaire, un composé de nonylphénol, un acide gras alcoxylé, un alcoxylate d'alkylphénol, un amide éthoxylé, une alkylamine éthoxylée, un sulfonate d'ester de méthyle, une kératine hydrolysée, un sulfosuccinate, un taurate, un oxyde d'amine, un alcool alcoxylé, une amine grasse éthoxylée, une bétaïne, une bétaïne modifiée, un composé d'ammonium quaternaire, un additif de microémulsion, ou n'importe quelle combinaison de ceux-ci.

9. Procédé selon une quelconque revendication précédente, dans lequel l'agent de régulation de libération de phase discontinue comprend un tensioactif polymère à base d'ester.

10. Procédé selon une quelconque revendication précédente, dans lequel l'agent de régulation de libération de phase discontinue comprend une substance tensioactive oléosoluble.

11. Procédé selon une quelconque revendication précédente, dans lequel la composition d'additif liquide est un composant d'un fluide d'entretien de puits de forage.

12. Procédé selon la revendication 11, dans lequel le fluide d'entretien de puits de forage comprend un coulis de ciment.

13. Procédé d'entretien d'un puits de forage dans une formation souterraine, le procédé comprenant :
le placement d'un fluide d'entretien de puits de forage comprenant (i) un matériau cimentaire et (ii) une composition d'additif liquide telle que définie dans l'une quelconque des revendications 1 à 10 dans le puits de forage et/ou la formation souterraine ; et
le fait de laisser durcir le ciment.

14. Procédé selon la revendication 13, dans lequel le fluide d'entretien de puits de forage comprend en outre un dispersant.
